# EUROPEAN PATENT APPLICATION

(11) **EP 4 253 486 A1**
(43) Date of publication of application: **04.10.2023**
(21) Application number: 21898796.4
(22) Date of filing: 19.11.2021
(51) Int. Cl.: C09D 5/24, C09D 5/44, C01B 32/158, C09D 7/40, C09D 7/80, C09D 201/00, B82Y 30/00

(54) **PRIMING COMPOSITION FOR CREATING A LIGHT ELECTRICALLY CONDUCTIVE PRIMING COATING**

(30) Priority: 30.11.2020 RU 2020139112
(71) Applicant: MCD Technologies S.a.r.l, 3364 Leudelange (LU)
(72) Inventor: PREDTECHENSKIY, Mikhail Rudolfovich, Novosibirsk, 630008 (RU); CHEBOCHAKOV, Dmitry Semenovich, respublika Khakasiya, 655650 (RU); SHILYAEV, Gleb Evgenievich, Novosibirsk, 630005 (RU)
(74) Representative: Dennemeyer & Associates S.A.
(86) International application number: PCT/RU2021/050384
(87) International publication number: WO 2022/115004

(57) **Abstract**

The invention relates to electrically conductive coatings, in particular to electrically conductive priming coatings of parts before they undergo electrostatic painting, as well as to priming compositions for creating such coatings (priming coatings). The present invention proposes a priming composition for creating a light, electrically conductive priming coating on a part prior to electrostatic painting, said priming composition comprising single-wall and/or double-wall carbon nanotubes at a concentration of greater than 0.005 wt.% and less than 0.1 wt.%, and having a degree of grinding of the priming composition of not more than 20 microns. The technical result of applying such a priming composition is a light, electrically conductive priming coating with a specific surface resistance of less than 10⁹ Ω/sq and a light reflection coefficient (LRV) of at least 60%. The present invention also proposes a method for preparing a priming composition and a light, electrically conducting priming coating.

## Description

### Background

The invention relates to electrically conductive coatings, more particularly to conductive priming coatings for parts before their electrostatic painting, as well as to priming formulations to produce such coatings (primers).

### Prior Art

Electrostatic painting is a widely used method in engineering to produce a painted coating, wherein the paint flow before its application on a part surface is divided into small electrically charged droplets. The advantages of this painting method, i.e., achieving a thin and uniform layer and allowing the process automation, have ensured its wide-spread application. This process requires that the part to be painted, or at least its surface, have an electrical conductivity sufficient to drain the electric charge brought by charged paint droplets, i.e., be electrically conductive. The part should have a surface resistance less than 10⁹ Ohm/square (Ohm/□), more preferably less than 10⁷ Ohm/□, most preferably less than 10⁵ Ohm/□. This condition is readily met if the part to be painted is made of an electrically conductive material, such as metal. However, many industries use parts that require painting, but they are made of polymer materials without the sufficient electrical conductivity. Thus, many parts of car body are characterized by the surface resistance more than 10¹²Ohm/□, which makes their electrostatic painting impossible. A layer of conductive priming coating has to be preliminarily created on such parts.

The industry widely employs a method to create conductive priming coatings by applying a suspension comprising carbon black (CB) in the amount of more than 3 wt.% on the part. After drying such suspension, a coating is obtained which comprises more than 10 wt.% of carbon black. A significant drawback of the method is dark gray (up to black) color of the coating. This causes serious difficulties in subsequent electrostatic painting into white color or light-color hues: to obtain a high light reflectance value (LRV), the applied layer of coating needs to be thickened, which reduces throughput of production painting lines, increases paint consumption, and can also adversely affect the coating service life.

A disclosure [CN110591483A, FUDAN Univ., 20.12.2019, C09D133/04 C09D175/04 C09D5/24 C09D7/46 C09D7/61] is known to provide the use of a mixture of 8-12 parts of a film-forming resin, 35-45 parts of a water-based adhesion promoter and wetting agent, 6.5-7.0 parts of a water-based thickener, 14-20 parts of water, 0.6-1.0 parts of a water-based dispersant, 0.6-1.0 parts of a water-based anti-foaming agent, 15-25 parts of titanium white, 0.1-0.8 parts of pigment carbon black, 0.1-6 parts of functional electrically conductive powder (Chinese: 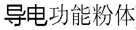 ). It follows from the disclosure that using the term "functional conductive powder", the authors refer to conductive graphene or conductive carbon black. Using this suspension as the primer produces a conductive coating: e.g., the presence of 0.36 wt.% of CB N311 and 0.22 wt.% of conductive graphene XF178 provides a coating surface resistance of 3.4 10⁵Ohm/□; to reduce the coating surface resistance to less than 3·10⁴Ohm/□, the concentration of the conductive graphene should be raised to more than 1.8 wt.%. The application provides no data on coatings comprising smaller amounts of the conductive functional powder and CB. An obvious drawback of the primer provided in Application for invention CN110591483A is a high concentration of carbon additives, i.e., 0.2 to 6.8 wt. parts (pigment CB and electrically conductive CB or graphene), which is always more than 0.17 wt.%. Such a high concentration of carbon additives results in the dark color of the produced priming coating.

A patent disclosure [CN104403397B, DONGFENG MOTOR, July 28, 2017, C09D5/24, C09D163/00, C09D133/00, B05D7/26, B05D3/02] is known to provide a composite priming formulation with carbon nanotubes having the contents of carbon nanotubes 0.1-1.5 wt.%, uniformly dispersed in a car priming formulation and obtained by introducing carbon nanotubes into the car priming formulation and subsequently dispersing the obtained mixture. The surface resistance of the coating produced by applying this priming formulation is 10³-10⁹ Ohm/□. At weight concentration of carbon nanotubes in the priming formulation 0.8 wt.%, the surface resistance of the coating produced by applying such priming formulation is 5·10⁶ Ohm/□. A prerequisite for using such priming formulation provided in the disclosure is that the color of the priming formulation is lighter than the color of the top paint layer of the car.

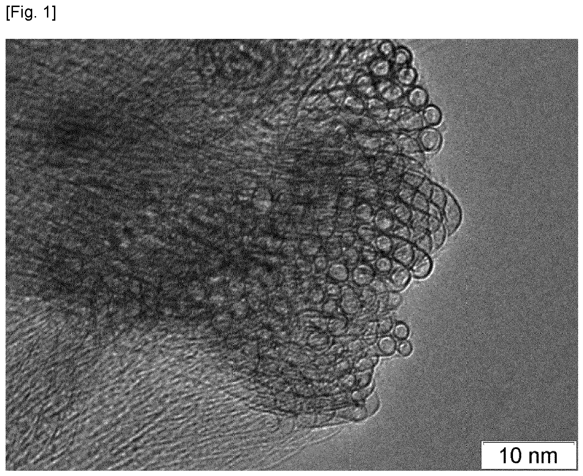

A drawback of the provided method is dark color of the obtained priming coating. It follows from the data provided in the discussed disclosure (Fig. 1 of discussed disclosure CN104403397B) that even upon introduction of the minimum amount claimed in the disclosure, i.e., 0.1 wt.%, of carbon nanotubes the coating has a dark-gray color with LRV about 50%. This dramatically limits the range of possible applications of this priming formulation to the car parts painted in dark colors. A further drawback of the provided method is the need to disperse carbon nanotubes in the priming formulation already containing all other components, i.e., in a rather viscous dispersion having a complex composition. Without preliminary dispersion of carbon nanotubes, the obtained priming formulation can be non-homogeneous, i.e., it may contain rather large agglomerates of nanotubes visible to the eye as black dots.

It follows from the above-mentioned description that an engineering problem of creating a conductive light-colored priming coating with a surface resistance less than 10⁹ Ohm/□ and a light reflectance value (LRV) of at least 60% exists. Application for invention [CN110591483A] and disclosure [CN104403397B] do not solve this problem. Patent disclosure [CN104403397B, DONGFENG MOTOR, July 28, 2017, C09D5/24, C09D163/00, C09D133/00, B05D7/26, B05D3/02] is adopted in the present invention as Prototype.

### Brief Summary of the Invention

The present invention provides a priming formulation to produce a light-colored conductive priming coating of a part before electrostatic painting, wherein the formulation comprises single-walled and/or double-walled carbon nanotubes in a concentration of more than 0.005 wt.% and less than 0.1 wt.%, and the degree of grinding of the priming formulation is not more than 20 µm.

The technical result of using such conductive priming formulation is to produce a light-colored conductive priming coating with a surface resistance less than 10⁹ Ohm/□ and a light reflectance value (LRV) of at least 60%. This allows subsequently painting a part in light colors or in white color.

The term "priming formulation" refers to a suspension with a complex composition comprising a solvent, film forming agents, dispersants, pigments, rheology and viscosity modifiers, agents improving primer adhesion to the material of the part to be painted and the top paint layer, and conductive additives. The chemical nature and the contents of the components of the priming formulation other than the conductive additive may be based on the material of the painted part, features of the process used for painting on a particular plant, economic parameters, based on the prior art, and are not the features of the present invention. For example, the priming formulation may be water-based (water as solvent), or the solvent may be an organic solvent, including but not limited to xylene, butyl acetate, methyl ethyl ketone, methoxypropyl acetate, toluene, cyclohexanone, etc. The film-forming agents may be selected but not limited to from known acrylic, epoxy, polyurethane, polyester, or other film-forming agents, but not limited to the provided examples.

The term "degree of grinding" refers to the size of particles and agglomerates of carbon nanotubes in the priming formulation determined as per standards [GOST 6589-74 Paints and Varnishes. Method for Determination of the Grinding Degree using a "Klin" Instrument (Grindometer)] and [ISO 1524:2020(en) Paints, Varnishes and Printing Inks - Determination of Fineness of Grind]. This parameter characterizes the upper bound of distribution of agglomerates of carbon nanotubes in the priming formulation according to the size.

The achieved technical result is caused by using single-walled and/or double-walled carbon nanotubes with the concentration of more than 0.005 wt.% and less than 0.10 wt.% as a conductive component in the priming formulation, well dispersed to agglomerate sizes of less than 20 µm.

The required distinctive feature providing the technical result is the use of single-walled and/or double-walled carbon nanotubes, rather than multi-walled carbon nanotubes, as the conductive component. Single-walled and double-walled carbon nanotubes, as well as multi-walled carbon nanotubes, combine high electrical conductivity with tubular morphology. However, the critical difference of single-walled and double-walled carbon nanotubes is their preferred agglomeration into bundles of hexagonally closely packed tubes bound by van der Waals forces (π - π interaction). For this reason, there are no coil-like agglomerates left in the suspension, but only bundles, upon dispersion of carbon nanotubes to the grinding degree of 20 µm or less. Multi-walled carbon nanotubes, on the other hand, are not prone to bundle formation, and their agglomerates most often have a coil morphology, even in the sizes of the order of several micrometers.

It is known that the percolation threshold, i.e., the minimum concentration, at which a connected cluster of dispersed particles distributed in the dispersion medium is formed, and the lower it is, the higher the length L to diameter d ratio for these particles. For spherical particles, the percolation threshold for randomly distributed particles is about 30% v/v. For particles with a higher L/d ratio, the percolation threshold is significantly lower, and the higher the ratio, the lower the threshold. For this reason, a priming formulation comprising linear agglomerates (bundles) of single-walled and/or double-walled carbon nanotubes has a significantly higher electrical conductivity compared to the primer comprising coil-like agglomerates, and a significantly lower concentration of linear agglomerates (bundles) of single-walled and/or double-walled carbon nanotubes than coil-like agglomerates is required to achieve a given conductivity, e.g., volume resistivity less than 10⁸ Ohm·cm.

Therefore, to achieve the technical result, the priming formulation has to comprise single-walled and/or double-walled carbon nanotubes, these nanotubes have to be dispersed to the maximum size 20 µm ensuring mostly linear morphology of agglomerates of single-walled and/or double-walled carbon nanotubes, and the concentration of single-walled and/or double-walled carbon nanotubes has to be less than 0.1 wt.%. Meeting these three requirements simultaneously ensures both a high electrical conductivity and a high light reflectance value (LRV of at least 60%).

It is preferred that, by its rheology, the priming formulation shall be a non-Newtonian pseudoplastic fluid, i.e., its viscosity depends on the shear rate and is the lower, the larger the shear rate, and a 10-fold increase in the shear rate decreases the viscosity by more than 2 times. Within the description of the fluid viscosity using the Ostwald—de Waele power-law relationship, this means that the flow behavior index is under 0.7. This would reduce the rate of agglomeration of single-walled and/or double-walled carbon nanotubes during storage of the priming formulation and its preparation for use, however, the technical result can also be achieved for a smaller deviation of the rheology of the priming formulation from ideal (Newtonian).

To optimize the rheology parameters of the priming formulation, i.e., its viscosity and the so-called thixotropy index, or the ratio of viscosities at different shear rates, the formulation preferably includes a rheology modifier. Such a modifier may be selected from but not limited to bentonite clays, layered silicates, layered alumosilicates, high molecular weight polymers or other known thickener, or diluent, or plasticizer, or gelling agent, or a combination thereof. The rheology modifiers and their contents are primarily chosen by the selected painting process requirements to the primer rheology.

The primer also preferably comprises 5 to 40 wt.% of white pigment that would increase the light reflectance value (LRV) of the produced priming coating. The said white pigment is preferably titanium dioxide (titanium white). Most preferably, the content of titanium dioxide in the primer is more than 20 wt.%. However, the technical result can also be achieved when using lower concentrations of titanium dioxide or when using a different white pigment, including but not limited to zinc oxide, magnesium oxide, calcium carbonate, barium sulphate, when using a pigment of a different color.

It is preferred that the primer further comprises 0.1 to 2 wt.% of dispersant to achieve the required degree of dispersion of single-walled and/or double-walled carbon nanotubes and pigment, i.e., the absence of multiple agglomerates with the size over 20 µm, at lower energy cost and in shorter times. By their chemical nature, the dispersants may include but are not limited to an alkyl ammonium salt of a high molecular weight copolymer, or a linear polymer with polar groups, or a block copolymer with polar groups. Some commercially available dispersants that may be used include but are not limited to Disperbyk 118, Disperbyk 161, Disperbyk 180, Disperbyk 2155, BYK 9076, or others. Note that in certain cases, the technical result can also be achieved in the absence of a dispersant.

The present invention also provides a method for producing a priming formulation, characterized in that it comprises the sequence of steps of (A) introducing a concentrate of single-walled and/or double-walled carbon nanotubes, which is a disperse system comprising at least 1 wt.% of single-walled and/or double-walled carbon nanotubes obtained by mechanical processing of a mixture of carbon nanotubes and a dispersion medium to the grinding degree of not more than 50 µm, into a mixture comprising at least a solvent, and (B) mixing the resultant mixture to form a homogeneous suspension with a grinding degree of not more than 20 µm.

The provided method may use a superconcentrate from disclosure [RU2654959C2, MSD Technologies S.A R.L., May 23, 2018, C01B 32/174, B82B 1/00, B82B 3/00, B82Y 40/00], i.e., the concentrate of single-walled and/or double-walled carbon nanotubes comprising at least 2 wt.% of single-walled and/or double-walled carbon nanotubes with a maximum size of agglomerates of carbon nanotubes not more than 50 µm, as the said concentrate of single-walled and/or double-walled carbon nanotubes. The concentrate of single-walled and/or double-walled carbon nanotubes may include but not limited to commercially available concentrates of single-walled TUBALL carbon nanotubes TUBALL MATRIX^{™} 204, TUBALL MATRIX^{™} 302 or others. However, the technical result can also be achieved when using a less concentrated dispersion of single-walled and/or double-walled carbon nanotubes in a dispersion medium, e.g., comprising 1.5 wt.% or even 1 wt.% of single-walled and/or double-walled carbon nanotubes.

The concentrate of single-walled and/or double-walled carbon nanotubes may be introduced simultaneously with introduction of one or several other components of the priming formulation. The method may also comprise one or several further steps of introduction of other components of the priming formulation and additional mixing. An embodiment of the provided method is a method, wherein all other components of the priming formulation were introduced to the solvent and mixed before step (A), and the sequence of steps (A) and (B) completes the production of the priming formulation. Another possible embodiment of the provided method is a method, wherein dispersants and a film-forming agent were introduced in the solvent before step (A), while at step (A), the concentrate of single-walled and/or double-walled carbon nanotubes is introduced together with white pigment, which is dispersed simultaneously with mixing the concentrate of single-walled and/or double-walled carbon nanotubes at step (B) that completes the production of the priming formulation.

A distinctive feature of the method for producing the priming formulation which provides the technical result is that the production of the priming formulation includes the step of introduction of pre-dispersed concentrate of single-walled and/or double-walled carbon nanotubes. Pre-dispersion to the grinding degree not more than 50 µm is necessary to disperse nanotubes during the subsequent step of their mechanical mixing in the priming formulation to produce a homogeneous suspension with the grinding degree not more than 20 µm, whose application on the surface and subsequent drying produce a film with a high conductivity (surface resistance less than 10⁹ Ohm/□) and a high light reflectance value (LRV of at least 60%).

At step (B), mixing of the mixture obtained at step (A) to produce the homogeneous suspension with the grinding degree not more than 20 µm can be performed by any known method of mixing and using the equipment for mixing, including but not limited to vertical-type stirrers (also referred to as dissolvers), planetary mixers, rotor-stator type mixers, twin-screw mixers, as well as units for dispersion, e.g., colloid mills, bead mills, planetary mills, ball mills, etc. In some applications, mixing is preferably performed using a disk dissolver, i.e., a vertical-type stirrer with a disk impeller, preferably with a toothed disk impeller. In some applications, mixing is preferably performed using a bead mill, the bead diameter is preferably more than 0.4 mm and less than 1.8 mm, and the bead volume to the suspension volume ratio is more than 0.5 and less than 2 at the input energy more than 10 W·h/kg.

In some applications, all components of the priming formulation other than the concentrate of single-walled and/or double-walled carbon nanotubes were preferably introduced to the solvent and mixed before step (A), and the sequence of steps (A) and (B) completes the production of the priming formulation.

In some applications, dispersants and a film-forming agent were preferably introduced to the solvent before step (A), while at step (A) the concentrate of single-walled and/or double-walled carbon nanotubes and the white pigment are introduced to the mixture containing solvent, dispersants, and film-forming agent, and dispersion of the white pigment is performed at step (B) that completes the production of the priming formulation.

Direct introduction of single-walled and/or double-walled carbon nanotubes into the priming formulation without their pre-dispersion cannot achieve the technical result because of insufficient degree of dispersion of the obtained suspension and, thus, the presence of numerous coil-like agglomerates with the size over 20 µm. Direct introduction of single-walled and/or double-walled carbon nanotubes into the priming formulation at concentration of single-walled and/or double-walled carbon nanotubes less than 0.1 wt.% produces the surface resistance of the obtained priming coating higher than 10⁹ Ohm/□, and any attempt to achieve the required resistance by increasing the concentration of single-walled and/or double-walled carbon nanotubes above 0.1 wt.% renders the priming coating unacceptably dark (with LRV less than 60%). Furthermore, the presence of large agglomerates of single-walled and/or double-walled carbon nanotubes compromises the quality of the priming formulation, i.e., its surface includes black dots visible by the eye.

The present invention provides a light-colored conductive priming coating produced by applying the described priming formulation on the part surface and subsequent drying.

Drying refers to a partial removal of solvents from the priming formulation applied on the part surface. This can be achieved with heating or without heating of the part, with blowing with an air flow, or by natural convection. For some applications, drying is preferably performed to the solvent content in the priming layer less than 20 wt.% or even less than 1 wt.%. For some applications, a higher content of solvent is preferably left in the priming layer, such as 30 wt.%. The choice of the drying degree, drying conditions, and drying time depends on the chemical composition of the top paint layer, as well as on the particular process implementation.

The priming coating may be produced by applying the provided priming formulation on a part made of a polymer material with the surface resistance more than 10¹⁰ Ohm/square; for example, the painted part may be made of polymers, including but not limited to polypropylene, polyamide, polycarbonate, copolymer of acrylonitrile, butadiene and styrene, or a mixture thereof.

The priming coating may be produced by applying the provided priming formulation on a part made of a composite material with the surface resistance more than 10¹⁰ Ohm/square; for example, the painted part may be made of talc-filled polypropylene, glass-filled polyamide, carbon-filled polyamide, or polyester sheet press-material (SMC composite).

The invention is illustrated by examples and drawings provided below. In the following Examples illustrating embodiments of the present invention, the surface resistivity was measured as per ANSI/ESD STM 11.11-2015. The degree of grinding in the produced priming formulation was measured as per ISO 1524:2020. Light reflectance value (LRV) for the applied priming coating was measured using a BYK spectro2guide spectrophotometer with d8 geometry. Viscosity of priming formulations was measured using a Brookfield DV3T viscometer with the RV-04 spindle at 25°C for 100 ml samples.

The examples and drawings are provided to better illustrate the solutions to the technical problem provided by the invention and do not exhaust all possible embodiments of the invention.

### Brief Description of Drawings

### Figure 1

[Fig. 1] Transmission electron micrograph of single-walled carbon nanotubes used in Examples 1-3.

### Figure 2

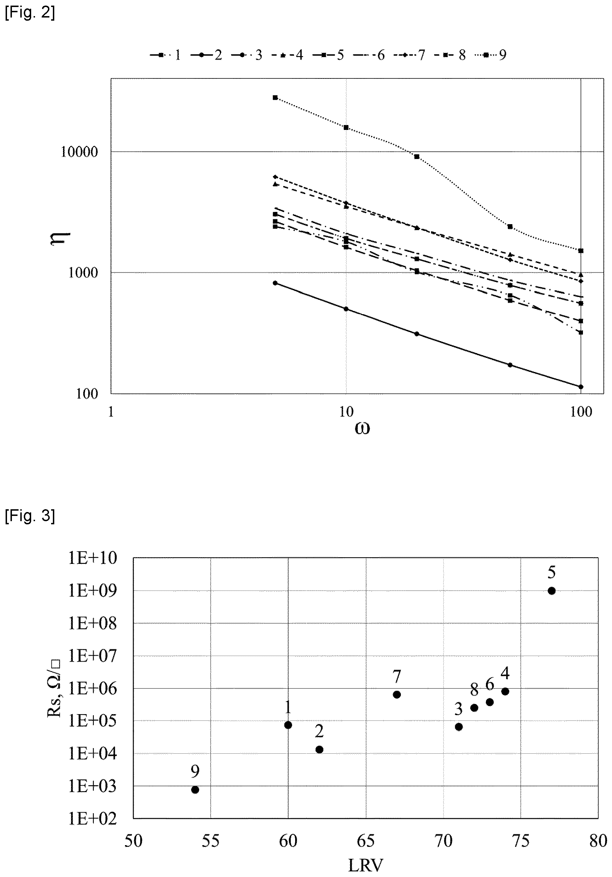

[Fig. 2] Dynamic viscosity η, mPa·s, of the priming formulations of Examples 1-9 versus the rotation speed of viscosity meter spindle ω, rpm.

### Figure 3

[Fig. 3] Surface resistivity of the priming coating, Rs, Ohm/□, and light reflectance value, LRV, %, of the priming coating versus the concentration of single-walled and/or double-walled carbon nanotubes in the priming formulation. Numbers next to the points indicate Example numbers.

### Figure 4

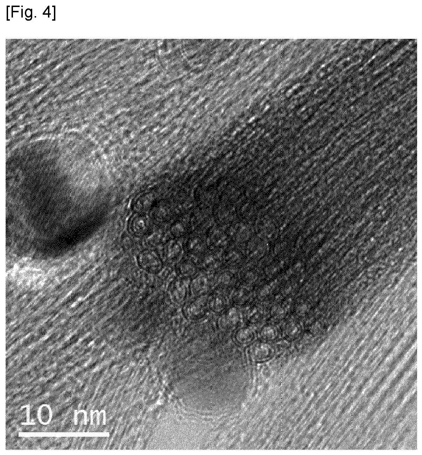

[Fig. 4] Transmission electron micrograph of single-walled and double-walled carbon nanotubes used in Example 6.

**[Table1]**

| Substrate | Substrate features | | Priming coating features | | |
|---|---|---|---|---|---|
| | Rs, Ohm/□ | LRV, % | Thickness, µm | Rs, Ohm/□ | LRV, % |
| Polypropylene | More than 10¹² | 72 | 16 | 6.3·10⁴ | 72 |
| ABS copolymer | More than 10¹² | 80 | 16 | 5.0·10⁴ | 72 |
| Polycarbonate | More than 10¹² | 80 | 16 | 6.3·10⁴ | 72 |
| Polyamide | More than 10¹² | 80 | 15 | 5.0·10⁴ | 72 |
| Talc-filled polypropylene | More than 10¹² | 85 | 17 | 6.3·10⁴ | 73 |
| Glass-filled polyamide | More than 10¹² | 83 | 16 | 6.3·10⁴ | 72 |
| Carbon-filled polyamide | More than 10¹² | 26 | 15 | 6.3·10⁴ | 63 |

### Description of Embodiments

### Examples

The preferred embodiment of the invention.

### Example 1.

The priming formulation was produced with commercially available carbon nanotube concentrate TUBALL^{™} MATRIX 302 comprising 10 wt.% of TUBALL^{™} single-walled carbon nanotubes (SWCNT) and 90 wt.% of a mixture of propane-1,2-diol with sodium 2,2'-[(1,1'-biphenyl)-4,4'-diyldi-2,1-ethylenediyl]bis-(benzene sulphonate) and produced by mechanically processing a mixture of carbon nanotubes and dispersion medium to the grinding degree of the mixture 40 µm. A transmission electron micrograph of single-walled carbon nanotubes in the used concentrate is shown in Fig. 1. In a metal 1.5 I container, 100.0 g of titanium dioxide DuPont R706 and 9.9 g of carbon nanotube concentrate TUBALL^{™} MATRIX 302 were simultaneously introduced into a pre-mixed mixture comprising 546.1 g of commercially available aqueous emulsion of acryl resin Lacryl 8810 with non-volatiles content 44 wt.%, 327.0 g of distilled water, 14.0 g of an acrylic polymer-based dispersing agent Kusumoto Disparlon AQ D-400, 2 g of a vegetable oil-based deaerating agent WS 360, and 1.0 g of a rheology modifier based on modified layered silicates Laponite-RD. The obtained mixture was mixed using a rotor-stator type mixer IKA T50 digital ULTRA-TURRAX at rotation speed 10000 rpm for 40 minutes until a homogeneous suspension was formed. The SWCNT content in the produced priming formulation was 0.099 wt.%. The volume resistivity of the priming formulation was 3.5-10¹ Ohm·cm, the degree of grinding of the priming formulation was 19 µm. As follows from the dynamic viscosity of the priming formulation versus the rotation speed of the viscometer spindle shown in Fig. 2, the priming formulation meets the Ostwald—de Waele power-law relationship with a flow behavior index of 0.43. The obtained priming formulation was applied on a polymer substrate made of polypropylene using a spray gun and dried at a room temperature for 24 hours. The post-drying thickness of the priming coating was 17 µm. The surface resistivity of the priming coating was 7.2·10⁴ Ohm/□. The measured light reflectance value (LRV) of the priming coating was 60%. The data on light reflectance values and surface resistivities of the coatings obtained in this Example and in the Examples 2-9 below are shown in Fig. 3.

Invention Embodiments.

### Example 2.

The priming formulation was prepared using commercially available carbon nanotube concentrate TUBALL^{™} MATRIX 302, as in Example 1. In a metal 1.5 I container, 124.0 g of barium sulphate "Barit", 124.0 g of calcium carbonate "Microcaltsit KM-2", 248.0 g of titanium dioxide DuPont R706, and 8.5 g of carbon nanotube concentrate TUBALL^{™} MATRIX 302 were simultaneously introduced into a mixture comprising 389.7 g of commercially available aqueous emulsion of acryl resin Lacryl 8810 with non-volatiles content 44 wt.%, 96.7 g of distilled water, 24.2 g of an acrylic polymer-based dispersing agent Kusumoto Disparlon AQ D-400, and 3 g of a vegetable oil-based deaerating agent WS 360. The mixture was mixed using a bead mill Dispermat CN 20 with a mill chamber TML1 with the diameter of the outer impeller 40 mm and internal disk 60 mm, with the diameter of zirconium beads being in the range of 1.2 mm to 1.7 mm, with zirconium oxide beads to mixture volume ratio in the mill chamber 8:13. Mixing was performed at impeller rotation speed 10.7 m/sec (3,400 rpm) for 30 minutes until a homogeneous suspension was formed; the total input energy was 46.8 W·h/kg. After that, 60.0 g of the obtained mixture was mixed with a mixture comprising 31.8 g of commercially available aqueous emulsion with non-volatiles content 44 wt.% Lacryl 8810, 7.8 g of distilled water, 0.014 g of a vegetable oil-based deaerating agent WS 360, and 0.01 g of a rheology modifier based on modified layered silicates Laponite-RD. Mixing was performed using an overhead stirrer for 15 minutes, the rotation speed was 1.9 m/sec (1,500 rpm, impeller diameter 20 mm). The SWCNT content in the produced priming formulation was 0.05 wt.%. The volume resistivity of the priming formulation was 3.4·10³ Ohm·cm, the degree of grinding of the priming formulation was 17.5 µm. As follows from the dynamic viscosity of the priming formulation versus the rotation speed of the viscometer spindle shown in Fig. 2, the priming formulation meets the Ostwaldde Waele power-law relationship with a flow behavior index of 0.32. The prepared priming formulation was applied on polymer substrates made of polypropylene, ABS copolymer, polycarbonate, polyamide, talc-filled polypropylene, glass-filled polyamide, carbon-filled polyamide using a spray gun and dried at a room temperature for 24 hours. The post-drying thicknesses of priming coatings, their surface resistivities and light reflectance values (LRV), as well as surface resistivities and light reflectance values for the substrates before applying the priming coating are provided in Table 1.

### Example 3.

The priming formulation was prepared using commercially available carbon nanotube concentrate TUBALL^{™} MATRIX 302, as provided in Example 1. In a metal 1.5 I container, 124.0 g of barium sulphate "Barit", 124.0 g of calcium carbonate "Microcaltsit KM-2", 248.0 g of titanium dioxide DuPont R706, and 17.0 g of carbon nanotube concentrate TUBALL^{™} MATRIX 302 were simultaneously introduced into a pre-mixed mixture comprising 389.7 g of commercially available aqueous emulsion of acryl resin Lacryl 8810 with non-volatiles content 44 wt.%, 96.7 g of distilled water, 24.2 g of an acrylic polymer-based dispersing agent Kusumoto Disparlon AQ D-400, and 3 g of a vegetable oil-based deaerating agent WS 360. The mixture was mixed using a rotor-stator type mixer IKA T50 digital ULTRA-TURRAX at rotation speed 10000 rpm for 40 minutes until a homogeneous suspension was obtained. After that, 60.0 g of the obtained mixture was mixed with a mixture comprising 31.8 g of commercially available aqueous emulsion with non-volatiles content 44 wt.% Lacryl 8810, 7.8 g of distilled water, 0.014 g of a vegetable oil-based deaerating agent WS 360, and 0.01 g of a rheology modifier based on modified layered silicates Laponite-RD. Mixing was performed using an overhead stirrer for 15 minutes, rotation speed was 3.4 m/sec (1,500 rpm, impeller diameter 40 mm) until a homogeneous suspension was formed. The produced priming formulation comprises 0.099 wt.% SWCNT. The volume resistivity of the priming formulation was 7.8·10² Ohm·cm, the degree of grinding of the priming formulation was 19 µm. As follows from the dynamic viscosity of the priming formulation versus the rotation speed of the viscometer spindle shown in Fig. 2, the priming formulation meets the Ostwald-de Waele power-law relationship with a flow behavior index of 0.41. The prepared priming formulation was applied on a polymer substrate made of polypropylene using a spray gun and dried at a room temperature for 24 hours. The post-drying thickness of the priming coating was 17 µm. The surface resistivity of the priming coating was 1.3·10⁴ Ohm/□. The measured light reflectance value (LRV) of the priming coating was 62 %.

### Example 4.

The priming formulation was prepared using a carbon nanotube concentrate comprising 5 wt.% of single-walled carbon nanotubes and 95 wt.% of a mixture of triethylene glycol dimethacrylate and alkyl ammonium salt of high molecular weight copolymers and produced by mechanically processing a mixture of carbon nanotubes and dispersion medium to the grinding degree of the mixture 35 µm. In a metal 500 ml container, 36.6 g of titanium dioxide DuPont R706 and 2.0 g of the carbon nanotube concentrate were simultaneously introduced into a pre-mixed mixture of 108.2 g of 20 wt.% solution in xylene of commercially available adhesion promoter Superchlon 822S, 1.0 g of a dispersant Disperbyk 118, 1.8 g of a rheology modifier based on modified silicates Claytone HY, 17.2 g of xylene, and 1.3 g of toluene. The mixture was mixed using a bead mill Dispermat CN 20 with an add-on module APS-500, a polyamide disk with the diameter 60 mm, with zirconium oxide beads to mixture volume ratio 1:1 for 30 minutes at rotation speed 8.5 m/sec (2,700 rpm) until a homogeneous suspension was formed. A mixture comprising 5.5 g of 20 wt.% solution in xylene of commercially available adhesion promoter Superchlon 822S, 7.2 g of toluene and 3.0 g of xylene was added to 84.2 g of the obtained mixture, and mixed using an overhead stirrer for 15 minutes at rotation speed 3.1 m/sec (1,500 rpm, impeller diameter 40 mm). The produced priming formulation comprises 0.099 wt.% SWCNT. The volume resistivity of the produced priming formulation was 6.0·10⁴ Ohm·cm, the degree of grinding of the priming formulation was 15 µm. As follows from the dynamic viscosity of the priming formulation versus the rotation speed of the viscometer spindle shown in Fig. 2, the priming formulation meets the Ostwald—de Waele power-law relationship with a flow behavior index of 0.42. The obtained priming formulation was applied on a polymer substrate made of polypropylene using a spray gun and dried at a room temperature for 20 minutes. The post-drying thickness of the priming coating was 12 µm. The surface resistivity of the priming coating was 7.9·10⁵ Ohm/□. The measured value of light reflectance value (LRV) of the priming formulation was 74%.

### Example 5.

The priming formulation was prepared using a carbon nanotube concentrate comprising 2 wt.% of single-walled carbon nanotubes and 98 wt.% of a mixture of triethylene glycol dimethacrylate and alkyl ammonium salt of high molecular weight copolymers and produced by mechanically processing a mixture of carbon nanotubes and dispersion medium to the grinding degree of the mixture 20 µm. In a metal 1.5 I container, 214.0 g of barium sulphate "Barit" and 2.5 g of the carbon nanotube concentrate were simultaneously introduced into a pre-mixed mixture of 172.0 g of commercially available acryl resin Degalan LP 64/12, 600.5 g of butyl acetate, 6.0 g of a dispersant Disperbyk 118, and 5.0 g of a rheology modifier based on modified silicates Claytone HY. The mixture was mixed using a bead mill Dispermat CN 20 with a mill chamber TML1 with the diameter of the outer impeller 20 mm and internal disk 60 mm, with the diameter of zirconium beads in the range of 0.8 mm to 1.0 mm, with the zirconium oxide beads to mixture volume ratio in the mill chamber 8:13. Mixing was performed at impeller rotation speed 10.7 m/sec (3,400 rpm) for 30 minutes until a homogeneous suspension was formed; the total input energy was 46.8 W·h/kg. The produced priming formulation comprises 0.005 wt.% SWCNT. The volume resistivity of the priming formulation was 3.4·10⁸ Ohm-cm, the degree of grinding of the priming formulation was 12 µm. As follows from the dynamic viscosity of the priming formulation versus the rotation speed of the viscometer spindle shown in Fig. 2, the priming formulation meets the Ostwald—de Waele power-law relationship with a flow behavior index of 0.35. The prepared priming formulation was applied on a polymer substrate made of polypropylene using a spray gun and dried at a room temperature for 24 hours. The post-drying thickness of the priming coating was 12 µm. The surface resistivity of the priming coating was 9.8·10⁸ Ohm/□. The measured light reflectance value (LRV) of the priming coating was 77%.

### Example 6.

The priming formulation was prepared using a carbon nanotube concentrate comprising 1 wt.% of single-walled and double-walled carbon nanotubes and 99 wt.% of a mixture of triethylene glycol dimethacrylate, a linear polymer with highly polar pigment-affine groups, and alkyl ammonium salt of high molecular weight copolymers and produced by mechanically processing a mixture of carbon nanotubes and dispersion medium to the grinding degree of the mixture 23 µm. A transmission electron micrograph of single-walled and double-walled carbon nanotubes in the used concentrate is shown in Fig. 4. In a metal 1.5 I container, 50 g of the carbon nanotube concentrate were introduced into a pre-mixed mixture of 172.0 g of commercially available acryl resin Degalan LP 64/12, 553.0 g of butyl acetate, 6.0 g of a dispersant Disperbyk 118, and 5.0 g of a rheology modifier based on modified silicates Claytone HY. The obtained mixture was mixed using an overhead stirrer at rotation speed 6.3 m/sec (2000 rpm, impeller diameter 60 mm) until a homogeneous suspension was formed. After that, 214.0 g of titanium dioxide DuPont R706 were additionally introduced into the mixture and mixed using a bead mill Dispermat CN 20 with a mill chamber TML1 with the diameter of outer impeller 40 mm and internal disk 60 mm, with the diameter of zirconium beads in the range of 0.8 mm to 1.0 mm, with the zirconium oxide beads to mixture volume ratio in the mill chamber 8:13. Mixing was performed at impeller rotation speed 10.7 m/sec (3,400 rpm) for 30 minutes; the total input energy was 46.8 W·h/kg. The produced priming formulation comprises 0.05 wt.% of single-walled and double-walled carbon nanotubes. The volume resistivity of the priming formulation was 5.6·10⁴ Ohm·cm, the degree of grinding of the priming formulation was 14 µm. As follows from the dynamic viscosity of the priming formulation versus the rotation speed of the viscometer spindle shown in Fig. 2, the priming formulation meets the Ostwald—de Waele power-law relationship with a flow behavior index of 0.40. The prepared priming formulation was applied on a polymer substrate made of polypropylene using a spray gun and dried at a room temperature for 24 hours. The post-drying thickness of the priming coating was 14 µm. The surface resistivity of the produced priming coating was 3.7·10⁵ Ohm/□. The measured light reflectance value (LRV) of the priming coating was 73%.

### Example 7.

The priming formulation was prepared using commercially available carbon nanotube concentrate TUBALL^{™} MATRIX 204 comprising 10 wt.% of single-walled carbon nanotubes and 90 wt.% of a mixture of triethylene glycol dimethacrylate and alkyl ammonium salt of high molecular weight copolymers and produced by mechanically processing a mixture of carbon nanotubes and dispersion medium to the grinding degree of the mixture 40 µm. In a glass 150 ml container, 0.5 g of carbon nanotube concentrate TUBALL^{™} MATRIX 204 was introduced into a pre-mixed priming mixture comprising 13 g of commercially available acrylic resin Dianal BR-116 (40 wt.% solution in toluene), 25.7 g of commercially available acrylic resin Superchlone 930S (solution 20 wt.% in xylene), 23.7 g of xylene, 11.9 g of butyl acetate, 24.0 g of titanium dioxide DuPont R706, 0.5 g of a rheology modifier based on modified silicates Claytone 40, and 0.6 g of a dispersant Disperbyk 118. The mixture was mixed using an overhead stirrer for 20 minutes until a homogeneous suspension was formed, rotation speed was 4.2 m/sec (2000 rpm, impeller diameter 40 mm). The produced priming formulation comprises 0.05 wt.% SWCNT. The volume resistivity of the produced priming formulation was 5.0·10⁴ Ohm·cm, the degree of grinding of the priming formulation was 15 µm. As follows from the dynamic viscosity of the priming formulation versus the rotation speed of the viscometer spindle shown in Fig. 2, the priming formulation meets the Ostwald—de Waele power-law relationship with a flow behavior index of 0.31. The produced priming formulation was applied on a polymer substrate made of polypropylene using a spray gun and dried at a room temperature for 10 minutes. The post-drying thickness of the priming coating was 17 µm. The surface resistivity of the produced priming coating was 6.3·10⁵ Ohm/□. The measured light reflectance value (LRV) of the priming coating was 67 %.

### Example 8.

The priming formulation was prepared using commercially available carbon nanotube concentrate TUBALL^{™} MATRIX 204, as provided in Example 7. In a metal 500 ml container, 48.0 g of titanium dioxide DuPont R706 and 1.0 g of commercially available carbon nanotube concentrate TUBALL^{™} MATRIX 204 were simultaneously introduced into a pre-mixed mixture of 26.0 g of commercially available acrylic resin Dianal BR-116 (40 wt.% solution in toluene), 51.4 g of commercially available acrylic resin Superchlone 930S (solution 20 wt.% in xylene), 47.2 g of xylene, 24.0 g of butyl acetate, 1.0 g of a rheology modifier based on modified silicates Claytone 40, and 1.2 g of a dispersant Disperbyk 118. The mixture was mixed using a bead mill Dispermat CN 20 with an add-on module APS-500, a polyamide disk with diameter 60 mm, with the zirconium oxide beads to mixture volume ratio 1:1 for 30 minutes at rotation speed 8.5 m/sec (2,700 rpm) until a homogeneous suspension was formed; the total input energy was 37.2 W·h/kg. The produced priming formulation comprises 0.05 wt.% SWCNT. The volume resistivity of the priming formulation was 4.8·10⁵ Ohm·cm, the degree of grinding of the priming formulation was 14 µm. As follows from the dynamic viscosity of the priming formulation versus the rotation speed of the viscometer spindle shown in Fig. 2, the priming formulation meets the Ostwald—de Waele power-law relationship with a flow behavior index of 0.41. The obtained priming formulation was applied on a polymer substrate made of polypropylene using a spray gun and dried at a room temperature for 30 minutes. The post-drying thickness of the priming coating was 14 µm. The surface resistivity of the priming coating was 2.5·10⁵ Ohm/□. The measured light reflectance value (LRV) of the priming coating was 72 %.

### Example 9. (Comparative)

The priming formulation was prepared similarly to Example 4, although 20.0 g of carbon nanotube concentrate was introduced. The produced priming formulation comprises 0.5 wt.%. The volume resistivity of the produced priming formulation was 1.2·10² Ohm·cm, and its degree of grinding was 26 µm. As can be seen from Fig. 2, the produced priming formulation has an extremely high viscosity, which limits possible methods of its application on a substrate. The priming formulation was applied on a polymer substrate made of polypropylene using a spray gun and dried at a room temperature for 24 hours. The post-drying thickness of the priming coating was 34 µm. The surface resistivity of the produced priming coating was 7.6·10² Ohm/□. The measured value of light reflectance value (LRV) was 54%. Thus, the produced priming formulation is not sufficiently light-colored.

### Industrial Applicability

The present invention can be used to produce conductive priming coatings with a light reflectance value at least 60% on the parts made of polymer or composite materials with the surface resistance more than 10¹⁰ Ohm/square before electrostatic painting, as well as in the production of priming formulations to produce such coatings.

## Claims

1. A priming formulation to produce a light-colored conductive priming coating of a part before electrostatic painting, **characterized in that** the priming formulation comprises single-walled and/or double-walled carbon nanotubes in a concentration of more than 0.005 wt.% and less than 0.1 wt.%, and the degree of grinding of the priming formulation is not more than 20 µm.

2. The priming formulation of claim 1, **characterized in that** the priming formulation further comprises 5 to 40 wt.% of one or several white pigments selected from the group consisting of magnesium oxide, zinc oxide, titanium dioxide, calcium carbonate, barium sulphate.

3. The priming formulation of claim 1, **characterized in that** the priming formulation further comprises 0.1 to 2 wt.% of one or several dispersants selected from an alkyl ammonium salt of a high molecular weight copolymer and/or a linear polymer with polar groups, and/or a block copolymer with polar groups.

4. The priming formulation of claim 1, **characterized in that** the volume resistivity of the priming formulation is less than 10⁸ Ohm cm.

5. The priming formulation of claim 1, **characterized in that** the priming formulation is a pseudoplastic non-Newtonian fluid with the flow behavior index in the Ostwald—de Waele power-law relationship of less than 0.7.

6. The priming formulation of claim 1, **characterized in that** the priming formulation further comprises 0.1 to 5 wt.% of one or several rheology modifiers selected from the group consisting of bentonite, layered silicate, modified layered silicate, and a high molecular weight polymer.

7. A method for producing the priming formulation of claim 1, **characterized in that** the method comprises the sequence of steps of (A) introducing a concentrate of single-walled and/or double-walled carbon nanotubes, which is a disperse system comprising at least 1 wt.% of single-walled and/or double-walled carbon nanotubes and obtained by mechanical processing of a mixture of carbon nanotubes and a dispersion medium to the grinding degree of the resultant mixture of not more than 50 µm, into a mixture comprising at least a solvent, and (B) mixing the resultant mixture to form a homogeneous suspension with a grinding degree of not more than 20 µm.

8. The method of claim 7, **characterized in that** mixing at step (B) is performed using an overhead stirrer with a disk impeller.

9. The method of claim 7, **characterized in that** mixing at step (B) is performed using a rotor-stator type mixer.

10. The method of claim 7, **characterized in that** mixing at step (B) is performed using a bead mill with a bead diameter of more than 0.4 mm and less than 1.8 mm, and the bead volume to suspension volume ratio of more than 0.5 and less than 2 at the input energy of more than 10 W·h/kg.

11. The method of claim 7, **characterized in that** all other components of the priming formulation were introduced into the solvent and mixed before step (A), and the sequence of steps (A) and (B) completes the production of the priming formulation.

12. The method of claim 10, **characterized in that** dispersants and a film-forming agent are introduced into the solvent before step (A), and at step (A), the concentrate of single-walled and/or double-walled carbon nanotubes and a white pigment are introduced into the mixture containing a solvent, dispersants, and a film-forming agent, and dispersion of the white pigment is performed at step (B) that completes the production of the priming formulation.

13. A light-colored conductive priming coating, **characterized in that** the coating is produced by applying the priming formulation of claim 1 on the part surface and then drying.

14. The light-colored conductive priming coating of claim 13, **characterized in that** drying of the coating is performed until the residual solvent concentration is not more than 20 wt.%.

15. The light-colored conductive priming coating of claim 13, **characterized in that** the part to be painted is made of a polymer material with the surface resistance of more than 10¹⁰ Ohm/square.

16. The light-colored conductive priming coating of claim 13, **characterized in that** the part to be painted is made of a composite material with the surface resistance of more than 10¹⁰ Ohm/square.

17. The light-colored conductive priming coating of claim 15, **characterized in that** the part to be painted is made of polypropylene, or polyamide, or polycarbonate, or copolymer of acrylonitrile, butadiene and styrene, or a mixture thereof.

18. The light-colored conductive priming coating of claim 16, **characterized in that** the part to be painted is made of talc-filled polypropylene, or glass-filled polyamide, or carbon-filled polyamide, or polyester sheet press-material.
